Europäisches Patentamt

European Patent Office

Office européen des brevets

(11) Numéro de publication: **0 060 191**
**B1**

(12) **FASCICULE DE BREVET EUROPEEN**

(45) Date de publication du fascicule du brevet: **19.06.85**

(21) Numéro de dépôt: **82400371.9**

(22) Date de dépôt: **04.03.82**

(51) Int. Cl.⁴: **C 04 B 35/58,** C 04 B 35/66 //
H02K44/02

(54) **Matériau réfractaire destiné en particulier à être mis en contact avec de l'aluminium fondu et son procédé de fabrication.**

(30) Priorité: **04.03.81 FR 8104277**

(43) Date de publication de la demande:
**15.09.82 Bulletin 82/37**

(45) Mention de la délivrance du brevet:
**19.06.85 Bulletin 85/25**

(84) Etats contractants désignés:
**CH DE FR GB IT LI NL SE**

(56) Documents cités:
**FR-A-2 140 847**
**FR-A-2 377 362**
**GB-A-1 510 310**
**US-A-3 116 157**

**CHEMICAL ABSTRACTS, vol. 90, no. 20, mai 1979, page 233, abrégé 156009d, COLUMBUS OHIO (US)**

(73) Titulaire: **NOVATOME**
**20 Avenue Edouard Herriot**
**F-92350 Le Plessis Robinson (FR)**

(72) Inventeur: **Daviot, Jean**
**La Petite Beauce**
**F-91530 Saint-Cheron (FR)**

(74) Mandataire: **Le Brusque, Maurice et al**
**CREUSOT-LOIRE 15 rue Pasquier**
**F-75383 Paris Cedex 08 (FR)**

Courier Press, Leamington Spa, England.

# 0 060 191

**Description**

L'invention concerne un matériau réfractaire destiné à être mis en contact avec de l'aluminium fondu.

La réalisation de pompes électromagnétiques pour aluminium fondu nécessite l'emploi d'un matériau présentant des propriétés physiques, chimiques et mécaniques particulières. On pourra se reporter par exemple à la demande de brevet français n° 79-14585 déposée le 7 Juin 1979 par la demanderesse, qui décrit une pompe électromagnétique pour aluminium fondu. Dans cette demande de brevet la figure 2 montre que la spire 7 et les circuits magnétiques 3 et 5 sont ménagés dans des pièces en matériau réfractaire 11, 12 et 13 qui sont immergées dans un bain d'aluminium fondu. Ces pièces en matériau réfractaire doivent résister à l'oxydation à l'air à haute température et à l'action corrosive de l'aluminium et de ses alliages à l'état fondu si l'on utilise la pompe de tels alliages; ces pièces en matériau réfractaire doivent également supporter les chocs thermiques, en particulier au moment où l'on immerge la pompe dans l'aluminium fondu; elles doivent aussi être résistantes à la fatigue thermique puisque, une fois immergées, elles doivent supporter une haute température pendant une longue durée. En outre, ces pièces de matériau réfractaire doivent être mises en forme et usinées facilement car leurs formes sont complexes, en particulier parce que l'évidement qui forme la spire 7 doit avoir une forme spéciale.

Jusqu'à présent le matériau réfractaire utilisé par la demanderesse dans les pompes électromagnétiques pour aluminium fondu était un béton réfractaire fibreux tel que le béton décrit dans le brevet français n° 2.203.788 déposé le 24 Octobre 1972 par la demanderesse.

Ce béton fibreux était très résistant aux chocs thermiques ainsi qu'à la corrosion par l'aluminium, mais il présentait un grave inconvénient car il possédait des caractéristiques mécaniques faibles. Il s'ensuivait que, lors du nettoyage de la pompe, c'est à dire de la spire 7 si l'on se reporte à la demande de brevet n° 79-14585 citée plus haut, on érodait le béton trop tendre avec les outils métalliques utilisés. Ainsi, ce béton présentait une mauvaise résistance à l'abrasion.

On connaît d'autre part la composition réfractaire décrite dans la demande de brevet européen EP—A—004 509, constituée d'une pâte formée d'un ou plusieurs matériaux choisis parmi le nitrure de silicium, la chamotte d'argile, la gibbsite, le quartzite, les carbures, et autres matériaux, auxquels on ajoute de l'eau et éventuellement quelques pourcents d'un matériau choisi parmi le silicate alcalin, l'acide phosphorique ou des ciments hydrauliques. Toutefois, cette pâte étant durcie par frittage, elle doit obligatoirement comporter un matériau qui permette le frittage, tel que la silice, mais qui ne résiste pas à l'action corrosive de l'aluminium.

La demanderesse a tenté de remédier à ces inconvénients: le but de la présente invention est d'obtenir un matériau réfractaire qui présente non seulement une grande résistance à l'oxydation à l'air à haute température, à l'action corrosive de l'aluminium et de ses alliages à l'état fondu, aux chocs et à la fatigue thermique, mais qui comporte aussi la propriété de pouvoir être mis en forme et usiné facilement tout en possèdant une grande résistance à l'abrasion.

Pour parvenir à ce résultat, l'inventeur a eu l'idée d'utiliser un matériau réfractaire constitué d'un agrégat lié par un ciment et dans lequel, selon l'invention, l'agrégat est constitué par du nitrure de silicium dans une proportion comprise entre 70 et 80% du poids total du produit final et le ciment est constitué par de l'aluminate de calcium.

De préférence, le nitrure de silicium entrant dans la composition du matériau est un nitrure de silicium fritté par réaction.

L'invention concerne aussi le procédé de fabrication d'un matériau réfractaire selon l'invention. Ce procédé est caractérisé en particulier par le fait que le nitrure de silicium et l'aluminate de calcium sont d'abord mélangés à sec, puis malaxés dans un malaxeur humide avant d'être coulés dans des moules.

La granulométrie du nitrure de silicium employé peut être multiple; elle est adaptée aux dimensions des pièces à réaliser.

Le matériau ainsi obtenu présente des propriétés tout à fait exceptionnelles. Il résiste à l'oxydation à l'air, à l'action corrosive de l'aluminium et de ses alliages à l'état fondu, aux chocs et à la fatigue thermique et posséde des propriétés mécaniques nettement supérieures à celles des matériaux développés jusqu'à présent pour les pompes électromagnétiques à métal fondu. En particulier, il peut être mis en forme et usiné facilement tout en pouvant être nettoyé sans être érodé.

Un tel matériau peut être utilisé dans les pompes électromagnétiques dont nous avons parlé plus haut, mais il peut être aussi utilisé dans d'autres domaines, par exemple pour la fabrication de moules de fonderie d'aluminium, de toutes pièces de forme en contact avec l'aluminium liquide, de tuyaux, de briques réfractaires, de goulottes de coulée de métaux liquides, mais également pour la fabrication de revêtements de fours, de poches, de canalisations de sortie de liquides ou de gaz très chauds particulièrement réactifs. Son utilisation n'est pas limitée à l'industrie de l'aluminium: ce matériau réfractaire peut également être utilisé en contact avec d'autres métaux.

Afin de mieux comprendre l'invention, nous allons décrire ci-dessous un exemple de réalisation de l'invention.

On a utilisé un nitrure de silicium fritté par réaction, c'est-à-dire dans lequel le frittage et la réaction de nitruration ont eu lieu simultanément, présentant les caractéristiques suivantes:

2

**0 060 191**

| Densité | : 2,4 g/cm³ |
| Porosité | : 22% |
| Coefficient de dilatation | : $3.10^{-6}$ °$K^{-1}$=$3.10^{-6}$ °$C^{-1}$ |
| Conductivité thermique | : 16 $W.m^{-1}$ °$K^{-1}$ à 300°K (soit 16 $W.m^{-1}$ °$C^{-1}$ à 27°C) |
| Résistance à la rupture à la compression | : 550 M $Nm^{-2}$ |
| Module d'Young | : 170 G $Nm^{-2}$ |

Ce nitrure de silicium a été mélangé à l'aluminate de calcium dans un mélangeur en Y, à sec. Le mélange obtenu a ensuite été malaxé dans un malaxeur humide avec une teneur en eau de l'ordre de 15%. Le mortier obtenu a été coulé dans des moules fixés sur table vibrate et lubrifiés. Après prise du matériau, les pièces ont été démoulées, étuvées puis cuites à 800°C. On a alors obtenu un produit présentant les caractéristiques suivantes:

| Densité | : 2,1 g/cm³ |
| Résistance à la compression | : 50 $MN.m^{-2}$ |
| Module d'Young | : $4.10^4$ M $Nm^{-2}$ |
| Energie de rupture | : 150 $J/m^{-2}$ |
| Coefficient de conductibilité thermique | : 3 W $m^{-1}$ °$K^{-1}$=3 W $m^{-1}$ °$C^{-1}$ |
| Coefficient de dilatation | : $3,6.10^{-6}$ °$K^{-1}$ |

Comme on peut le voir, la résistance à la compression de ce matériau est élevée, ainsi que son énergie de rupture, alors que son coefficient de dilatation et son module d'Young sont faibles: ce produit est résistant à l'abrasion et aux chocs thermiques.

En utilisant le procédé précité, l'inventeur a pu obtenir un matériau de composites suivant:

| Aluminate de calcium | : 21% |
| Nitrure de silicium | : 79%, avec la granulométrie suivante: |
|     8—14 mesh (2,362—1,168 mm) | : 30% |
|     14—28 mesh (1,168—0,589 mm) | : 16,2% |
|     —28 mesh (—0,589 mm) | : 21,4% |
|     —325 mesh (—0,043 mm) | : 11,4% |

Ce matériau a donné des résultats très satisfaisants dans les pompes à aluminium liquide utilisées par la Demanderesse.

Le matériau dont nous allons donner la composition ci-dessous a également donné des résultats très satisfaisants:

| Aluminate de calcium | : 22% |
| Nitrure de silicium | : 78%, avec la granulométrie suivante |
|     14—28 mesh (1,168—0,589 mm) | : 34,5% |
|     28—48 mesh (0.589—0,295 mm) | : 28,5% |
|     —325 mesh (—0,043 mm) | : 15% |

Bien entendu, ces deux compositions ne sont que deux exemples de compositions ayant donné de très bons résultats: ces exemples ne sont pas limitatifs.

**Revendications**

1. Matériau réfractaire, destiné en particulier à être mis en contact avec de l'aluminium fondu, constitué d'un agrégat lié par un ciment, caractérisé par le fait que l'agrégat est constitué par du nitrure de silicium dans une proportion comprise entre 70% et 80% du poids total du produit final et que le ciment est constitué par de l'aluminate de calcium.

2. Matériau réfractaire selon la revendication 1, caractérisé par le fait que le nitrure de silicium entrant dans sa composition est un nitrure de silicium fritté par réaction.

3. Procédé de fabrication d'un matériau réfractaire selon l'une des revendications 1 ou 2, caractérisé par le fait que le nitrure de silicium et l'aluminate de calcium sont d'abord mélangés à sec puis malaxés dans un malaxeur humide avant d'être coulés dans des moules.

**Patentansprüche**

1. FF-Material, insbesondere zum Einsatz mit geschmolzenem Aluminium, bestehend aus einem mit einem Zement gebundenen Aggregat, dadurch gekennzeichnet, dass das Aggregat Siliziumnitrid in einem Verhältnis von insgesamt 70 bis 80 Gexichtsprozente des Enderzeugnisses umfasst, und dass der Zement aus Kalziumaluminat besteht.

2. FF-Material nach Anspruch 1, dadurch gekennzeichnet, dass das in dessen Zusammensetzung enthaltende Siliziumnitrid ein durch Reaktion gesintertes Siliziumnitrid ist.

3. Verfahren zur Herstellung eines FF-Materials nach einem der Ansprüche 1 oder 2, dadurch gekennzeichnet, dass das Siliziumnitrid und das Kalziumaluminat zuerst trocken vermengt, dann in einem Nasszwangsmischer gemischt werden bevor sie in Formen abgegossen werden.

**Claims**

1. A refractory material, intended in particular to be placed in contact with molten aluminium, consisting of an aggregate bound by a cement, characterised in that the aggregate consists of silicon nitride in a proportion of between 70% and 80% of the total weight of the final product and that the cement consists of calcium aluminate.

2. A refractory material according to Claim 1, characterised in that the silicon nitride present in its composition is silicon nitride sintered by a reaction.

3. Process for manufacturing a refractory material according to either of Claims 1 or 2, characterised in that silicon nitride and calcium aluminate are first mixed dry and then blended in a wet blender before being cast in moulds.